# FASCICULE DE BREVET EUROPEEN

(11) **EP 2 222 508 B1**
(45) Date de publication et mention de la délivrance du brevet: **04.05.2011**
(21) Numéro de dépôt: 08864446.3
(22) Date de dépôt: 18.12.2008
(51) Int. Cl.: B60R 16/02, H01B 13/012

(54) **PROCEDE DE MODELISATION D'UN CABLAGE ELECTRIQUE POUR VEHICULE, PROCEDE DE FABRICATION DU CABLAGE**
VERFAHREN FÜR DEN ENTWURF EINER ELEKTROVERDRAHTUNG FÜR EIN FAHRZEUG UND VERFAHREN ZUR HERSTELLUNG EINER DERARTIGEN VERDRAHTUNG
METHOD FOR MODELLING AN ELECTRIC WIRING FOR A VEHICLE, AND METHOD FOR MAKING SUCH WIRING

(30) Priorité: 21.12.2007 FR 0760295
(43) Date de publication de la demande: 01.09.2010
(73) Titulaire: Leoni Wiring Systems France, 78180 Montigny le Bretonneux (FR)
(72) Inventeur: CHRETIEN, Louis, F-92500 Rueil Malmaison (FR); WIETKOWSKI, Bernard, F-02840 Veslud (FR)
(74) Mandataire: de la Bigne, Guillaume Michel Marie
(86) Numéro de dépôt international: PCT/FR2008/052368
(87) Numéro de publication internationale: WO 2009/081058

(56) Documents cités:
- EP-A- 1 205 862
- DE-A1- 4 317 688
- GB-A- 2 265 261
- US-A1- 2007 067 750
- US-B1- 6 272 387

## Description

La présente invention concerne le domaine technique de la fabrication d'un câblage électrique pour véhicule et plus particulièrement de sa modélisation en vue de son assemblage et de son montage dans un véhicule automobile.

Un câblage électrique pour véhicule comprend un faisceau de conducteurs électriques et des éléments distincts de ce faisceau tels que des agrafes de fixation du faisceau au véhicule, des goulottes de guidage d'une branche du faisceau, des connecteurs électriques d'extrémité d'une branche du faisceau, etc..

Le câblage est monté dans le véhicule automobile dans une configuration spatiale opérationnelle. Un tel câblage est décrit dans le document DE 4317688A1 selon les caracteristiques du préambule de la revendication 1.

Habituellement, l'assemblage des différents éléments du câblage est réalisé à l'aide d'une planche d'assemblage. Cette planche d'assemblage comprend notamment des éléments de positionnement du câblage selon une configuration spatiale sensiblement plane, ce qui permet notamment de faciliter l'assemblage du câblage par un opérateur.

Généralement, la planche est fabriquée à partir de données d'un modèle numérique du câblage dans sa configuration spatiale plane. Ce modèle numérique est obtenu à partir d'un autre modèle numérique du câblage dans sa configuration spatiale opérationnelle. Ce dernier modèle numérique est réalisé par exemple à partir du câblage dans sa configuration spatiale opérationnelle.

Il est connu de réaliser le modèle numérique du câblage dans la configuration spatiale opérationnelle, en modélisant le faisceau par un objet numérique d'un type défini comme étant déformable et les éléments distincts du faisceau par un objet numérique d'un type défini comme étant indéformable.

Une fois le câblage assemblé sur la planche selon la configuration spatiale plane, on passe de la configuration plane à la configuration opérationnelle par déformation du câblage.

Or, lors de ce passage, l'opérateur est souvent confronté à des difficultés de montage du câblage dans le véhicule liées notamment au fait que les déformations théoriquement nécessaires pour passer de la configuration plane à la configuration opérationnelle vont au-delà des déformations tolérables par le faisceau. Dans ce cas, il est alors difficile, voire impossible d'obtenir la configuration spatiale opérationnelle souhaitée initialement.

Il est alors nécessaire de revenir à la configuration plane d'assemblage du câblage et procéder à des modifications de cette configuration et ce jusqu'à obtenir, après un nombre d'itérations relativement important, une configuration plane du câblage pouvant être déformée de façon à aboutir à une configuration opérationnelle acceptable.

Ceci conduit notamment à une perte de temps et éventuellement à des erreurs d'assemblage rendant parfois impossible le montage du câblage dans le véhicule automobile.

L'invention a notamment pour but de proposer un procédé de modélisation du câblage qui permette de réduire le nombre d'échecs lors du montage du câblage dans le véhicule.

A cet effet, l'invention a pour objet un procédé de modélisation d'un câblage électrique pour véhicule, le câblage étant destiné à être assemblé hors du véhicule dans une configuration spatiale sensiblement plane puis monté dans le véhicule dans une configuration spatiale opérationnelle obtenue par déformation de la configuration plane, le câblage comprenant un faisceau de conducteurs électriques et au moins un élément distinct de ce faisceau, procédé du type dans lequel on modélise :
a) au moins une première partie du faisceau par un objet numérique d'un type défini comme étant déformable, et
b) l'élément distinct du faisceau par un objet numérique d'un type défini comme étant indéformable,
   caractérisé en ce que :
   c) on identifie au moins une seconde partie du faisceau subissant des contraintes mécaniques critiques lors du passage de la configuration plane à la configuration opérationnelle, et
   d) on modélise cette seconde partie du faisceau par un objet numérique du type indéformable, et
   e) on réalise un modèle numérique du câblage dans la configuration opérationnelle comprenant tous les objets numériques de type déformable et indéformable.

La modélisation des parties du faisceau subissant des contraintes mécaniques critiques lors du passage de la configuration plane à la configuration opérationnelle, augmente considérablement les chances de succès d'obtention d'une configuration opérationnelle acceptable dès la première définition d'une configuration plane adaptée à l'assemblage du câblage.

Un procédé de modélisation selon l'invention peut en outre comporter l'une ou plusieurs des caractéristiques additionnelles suivantes :
- on réalise un modèle numérique du câblage dans la configuration plane à partir du modèle numérique du câblage dans la configuration opérationnelle ;
- la seconde partie du faisceau est choisie parmi :
   - une partie du faisceau formant une partie coudée,
   - une partie du faisceau formant une partie rectiligne,
   - une partie du faisceau formant une partie de raccordement de branches du faisceau ;
- l'objet numérique du type indéformable modélisant une partie coudée est défini par un volume indéformable de forme coudée comprenant deux extrémités de liaison avec respectivement deux objets numériques de type déformable ;
- l'objet numérique de type indéformable modélisant une partie rectiligne est défini par volume indéformable de forme rectiligne comprenant deux extrémités de liaison avec respectivement deux objets numériques de type déformable ;
- l'objet numérique de type indéformable modélisant une partie de raccordement de N branches du faisceau est défini par un volume indéformable comprenant N branches munies chacune d'une extrémité de liaison avec un objet numérique de type déformable, la longueur de chaque branche du volume indéformable étant proportionnelle au diamètre de la branche correspondante de la partie de raccordement ;
- l'élément distinct du faisceau est choisi parmi :
   - une goulotte de guidage d'une branche du faisceau,
   - un connecteur d'extrémité d'une branche du faisceau,
   - un organe de fixation d'une branche du faisceau au véhicule,
   - un organe de raccordement d'au moins deux branches du faisceau ;
- on réalise le modèle numérique du câblage dans la configuration opérationnelle à l'aide d'un programme d'ordinateur ;
- on réalise le modèle numérique de câblage dans la configuration plane à l'aide d'un programme d'ordinateur.

L'invention a en outre pour objet un procédé de fabrication d'une planche d'assemblage d'un câblage électrique pour véhicule, caractérisé en ce que l'on définit la planche d'assemblage à partir de données du modèle numérique du câblage dans la configuration plane, modélisé par le procédé de modélisation selon l'invention.

L'invention a encore pour objet une planche d'assemblage d'un câblage électrique pour véhicule, caractérisée en ce qu'elle est obtenue conformément au procédé de fabrication selon l'invention.

L'invention a enfin pour objet un procédé de fabrication d'un câblage électrique pour véhicule, caractérisé en ce que ce câblage est assemblé sur une planche d'assemblage selon l'invention.

L'invention sera mieux comprise à la lecture de la description qui va suivre, donnée uniquement à titre d'exemple et faite en se référant aux dessins dans lesquels :
- la figure 1 est une vue d'un câblage électrique pour véhicule dans une configuration spatiale opérationnelle ;
- la figure 2 est une vue d'une partie du câblage électrique de la figure 1 dans une configuration spatiale sensiblement plane ;
- la figure 3 est une modélisation numérique de la partie du câblage de la figure 2 dans une configuration spatiale opérationnelle ;
- la figure 4 est une vue d'un volume déformable définissant un objet déformable de la modélisation numérique de la figure 3 ;
- les figures 5A à 5D sont des vues de volumes indéformables définissant des objets indéformables de la modélisation numérique de la figure 3 ;
- la figure 6 est une vue d'objets déformables liés à un objet indéformable de la modélisation numérique de la figure 3 ;
- la figure 7 est une modélisation numérique de la partie du câblage de la figure 2 dans une configuration spatiale sensiblement plane, obtenue à partir de la modélisation numérique de la figure 3.

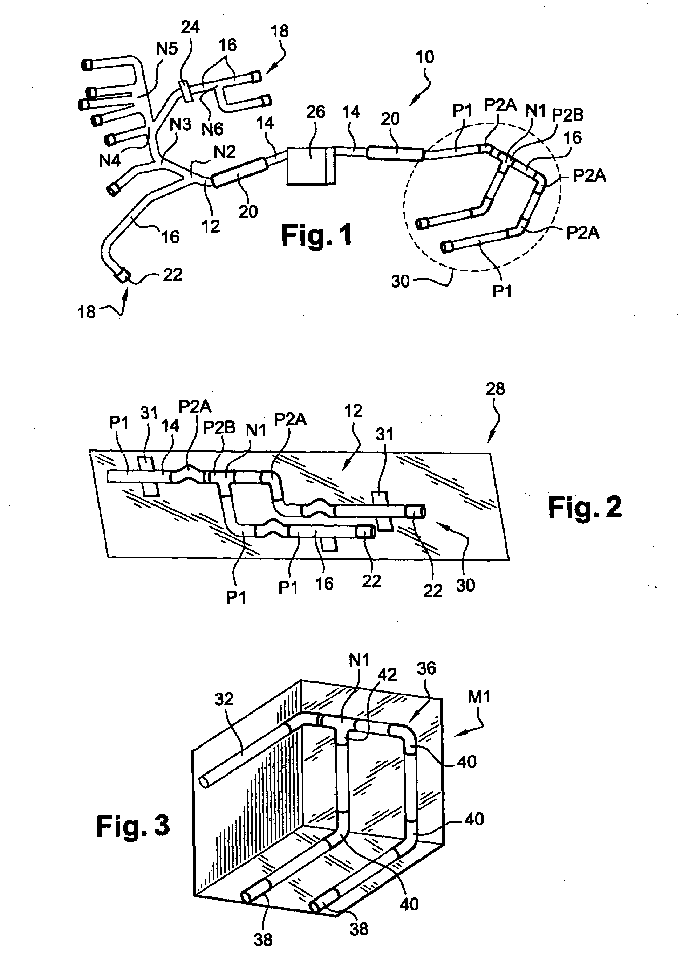

On a représenté sur la figure 1 un câblage électrique pour véhicule automobile. Ce câblage électrique est désigné par la référence générale 10. Sur la figure 1, le câblage 10 est représenté dans une configuration spatiale opérationnelle, c'est-à-dire une configuration d'utilisation du câblage dans le véhicule.

Le câblage 10 comprend un faisceau 12 de conducteurs électriques. Le faisceau 12 comprend une pluralité de branches. Chaque branche comporte des fils conducteurs électriques isolés chacun par une gaine isolante. L'ensemble des fils conducteurs de chaque branche définit un diamètre de cette branche. En particulier, le faisceau 12 comprend deux branches principales 14 comprenant par exemple plus de quarante fils auxquelles sont raccordées des branches secondaires 16 comprenant par exemple moins de quarante fils, le diamètre des branches principales 14 étant supérieur au diamètre des branches secondaires 16. Ces branches secondaires 16 sont raccordées aux branches principales 14 par des noeuds de dérivation N. On compte sur cette figure six noeuds de dérivation N1 à N6.

Le câblage électrique 10 comprend également au moins un élément 18 distinct du faisceau 12. Par exemple, dans l'exemple illustré sur la figure 1, on voit que le câblage 10 comprend deux goulottes 20 de guidage des deux branches principales 14 du faisceau 12, une pluralité de connecteurs 22 d'extrémité des branches secondaires 16 du faisceau 12, un organe 24 de fixation d'une branche secondaire 16 du faisceau au véhicule automobile telle qu'une agrafe de fixation et encore un organe 26 de raccordement des branches principales 14 du faisceau 12 entre elles. Dans cet exemple, l'organe 26 de raccordement est un boîtier de connexion électrique classique.

Ce câblage 10 est fabriqué conformément au procédé de fabrication selon l'invention. En particulier, le câblage 10 tel que représenté sur la figure 1 est obtenu par déformation du câblage 10 pour le faire passer d'une configuration spatiale sensiblement plane (telle que représentée sur la figure 2) à une configuration spatiale opérationnelle (telle que représentée sur la figure 1).

Ainsi, le câblage 10 est destiné à être assemblé hors du véhicule dans cette configuration spatiale sensiblement plane. Ce câblage 10 est assemblé sur une planche d'assemblage 28, représentée sur la figure 2. Sur cette figure, on a représenté seulement une partie 30 du câblage 10 (figure 1). En particulier, cette partie 30 du câblage 10 comprend une branche principale 14 et deux branches secondaires 16 raccordées à la branche principale 14 par le noeud de dérivation N1. La planche d'assemblage 28 comprend également des supportes 31 de positionnement de la partie 30 du câblage sur la planche 28.

Cette planche d'assemblage 28 est obtenue conformément à un procédé de fabrication selon l'invention. Dans ce procédé de fabrication, on définit la planche d'assemblage 28 à partir de données d'un modèle numérique du câblage 10 dans sa configuration plane du câblage 10, modélisé par un procédé selon l'invention.

Conformément à ce procédé de modélisation, on réalise tout d'abord un premier modèle numérique M1 du câblage 10 dans sa configuration spatiale opérationnelle (figure 3). Dans cette configuration opérationnelle, le câblage 10 est apte à être utilisé dans le véhicule.

Afin de réaliser le premier modèle M1, on modélise, au cours d'une première étape, des premières parties P1 du faisceau 12 par des objets numériques 32 d'un type défini comme étant déformable. Les premières parties P1 sont des parties de branches principales 14 et secondaires 16 du faisceau 12.

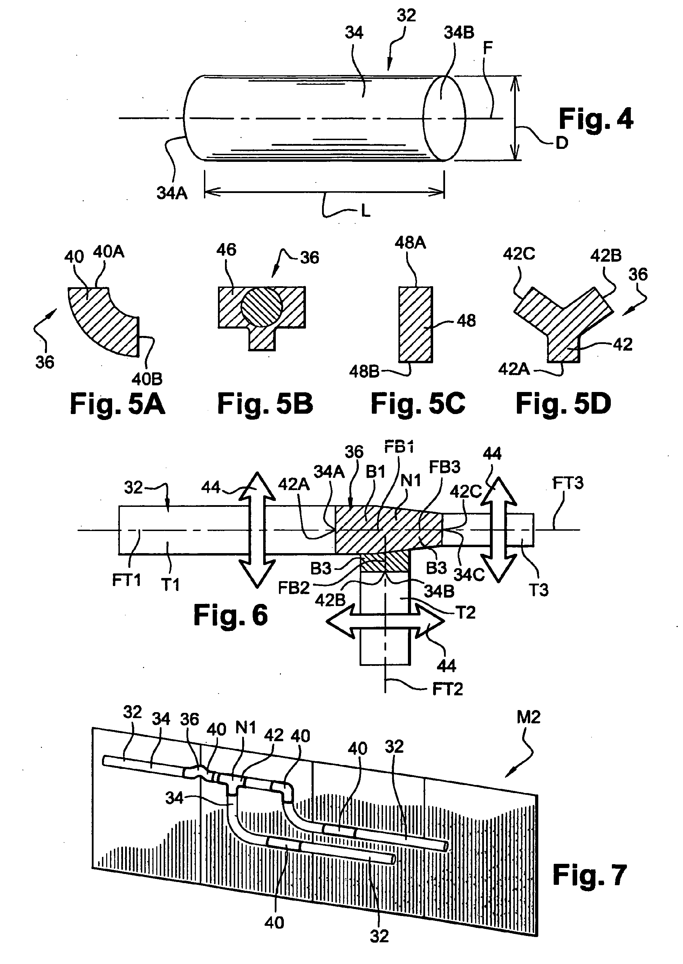

Ces objets numériques 32 d'un type déformable sont définis par exemple par des volumes déformables 34 en forme de toron, chaque toron 34 déformable étant défini par une fibre neutre F, un diamètre D et une longueur L (le diamètre et la longueur de chaque toron étant proportionnels respectivement au diamètre et à la longueur réels de la partie P1 de branches 14, 16 du faisceau 12 correspondante) (figure 4).

Par ailleurs, au cours d'une deuxième étape, on modélise les éléments distincts 18 du faisceau 12 par des objet numériques 36 d'un type défini comme étant indéformable. Des tels objets numériques 36 d'un type indéformable sont définis par des volumes indéformables ayant des formes sensiblement proches des formes des éléments 18 du câblage 10. Par exemple, l'objet indéformable 36 modélisant un connecteur d'extrémité 22 ou une agrafe de fixation 24 est défini par un volume indéformable 38 de forme cubique (figure 3) et l'objet numérique de type indéformable modélisant une goulotte 20 est défini par un volume indéformable (non représenté) de forme rectiligne ou coudée selon un trajet imposé à la branche correspondante du faisceau 12. Bien entendu, les objets indéformables 36 peuvent être définis par des volumes indéformables de formes différentes.

Une fois que l'on a modélisé les premières parties P1 du faisceau 12 par de tels objets numériques, on identifie au moins une seconde partie P2 du faisceau 12 subissant des contraintes mécaniques critiques lors du passage de la configuration plane à la configuration opérationnelle. En effet, lors de ce passage, cette seconde partie P2 identifiée est susceptible de subir des contraintes mécaniques relativement importantes, notamment de flexion et de torsion, cette partie P2 imposant une direction de déformation privilégiée.

Dans l'exemple illustré sur la figure 1, plusieurs parties P2 du faisceau 12 ont été identifiées, par exemple par un opérateur, comme susceptibles de subir des contraintes mécaniques critiques lors du passage d'une configuration à l'autre. En effet, les secondes parties P2 du faisceau 12 sont, dans cet exemple, quatre parties du faisceau 12 coudées P2A et une partie du faisceau 12 de raccordement P2B de trois branches 14, 16.

Dans une troisième étape, on modélise les parties P2A, P2B du faisceau 12 par des objets numériques de type indéformable 36.

En particulier, comme on peut le voir sur la figure 5A, l'objet numérique 36 de type indéformable modélisant une des parties coudées P2A est défini par un volume indéformable 40 de forme coudée qui comprend deux extrémités de liaison 40A, 40B avec respectivement deux objets numériques 32 de type déformable modélisant des premières parties P1 du faisceau 12. A cet effet, les volumes déformables 34 des objets numériques de type déformable comprennent chacun deux extrémités 34A, 34B de liaison avec des volumes indéformables et/ou déformables (figure 4).

En outre, l'objet numérique de type indéformable 36 modélisant la partie de raccordement P2B des trois branches du faisceau 12 au noeud de dérivation N1 est défini par un volume indéformable 42 comprenant trois branches B1, B2, B3 munies chacune d'une extrémité de liaison respectivement 42A, 42B, 42C avec un objet numérique de type indéformable 32. En particulier, on a représenté sur la figure 6, trois torons déformables T1, T2, T3 munis chacun d'une extrémité de liaison 34A, 34B, 34C avec une branche B1, B2, B3 respective du volume indéformable 42.

En particulier, les branches B1, B2, B3 du volume indéformable 42 ont des fibres neutres FB1, FB2, FB3 coïncidant avec celles FT1, FT2, FT3 des torons déformables T1, T2, T3. Dans cet exemple, les fibres neutres des branches B1 à B3 sont rectilignes et forment entre elles un angle droit. En variante, l'angle formé entre les fibres neutres des branches du volume indéformable peut être quelconque, par exemple proche de 90° (voir figure 5D). La longueur L1, L2, L3 de chaque branche B1, B2, B3 du volume indéformable 42 est par ailleurs définie comme étant la distance séparant un point de concours (N1) des fibres neutres FT1, FT2, FT3 des torons déformables et de l'extrémité de liaison 42A, 42B, 42C de la branche B1, B2, B3 respective. En particulier, cette longueur est proportionnelle au diamètre du toron correspondant et donc proportionnelle au diamètre de la branche du faisceau de la partie P1 modélisée par le toron. Les flèches 44 de la figure 6 indiquent notamment des directions de déformation tolérées par les torons déformables T1 à T3.

On a représenté également sur les figures 5B et 5C d'autres formes de volume indéformables pouvant être utilisées pour la modélisation de parties du faisceau 12 pouvant également subir des contraintes mécaniques. Par exemple, la figure 5B représente un objet indéformable 36 représentant une partie de raccordement de quatre branches du faisceau 12 défini par un volume indéformable 46 comprenant quatre branches, chaque branche comprenant une extrémité de liaison avec un objet de type déformable. Dans cet exemple, les quatre branches ont des fibres neutres rectiligne et perpendiculaires entre elles. En variante, le volume indéformable peut comporter N branches. La figure 5C représente un objet indéformable 36 modélisant une partie de branche rectiligne du faisceau 12 et est défini par un volume indéformable 48 de forme rectiligne comprenant deux extrémités de liaison 48A, 48B avec respectivement deux objets de type déformable 32. Bien entendu, d'autres formes de volumes indéformables peuvent convenir.

Le modèle numérique du câblage 10 dans la configuration opérationnelle comprend tous les objets numériques de type déformable 32 et indéformable 36 modélisant ainsi les premières P1 et secondes P2 parties du faisceau 12 ainsi que les éléments distincts 18 du faisceau 12. De préférence, ce premier modèle est réalisé à l'aide d'un programme d'ordinateur classique. Par exemple, le câblage 10 dans la configuration spatiale opérationnelle est fourni sous la forme d'un fichier de données numériques adapté pour sa lecture par le programme d'ordinateur. Les données numériques comprennent par exemple une définition des branches comprenant un nombre de fils conducteurs pour la branche, une longueur de la branche et la fibre neutre de la branche ainsi qu'une définition des éléments distincts comprenant leur position ainsi que leur encombrement.

Une fois que le premier modèle numérique M1 du câblage 10 dans la configuration opérationnelle est réalisé, on réalise un second modèle numérique M2 du câblage 10 dans la configuration sensiblement plane à partir du premier modèle numérique M1. Ce modèle M2 est représenté par la figure 7. En particulier, on réalise ce second modèle numérique M2 de câblage à l'aide d'un programme d'ordinateur classique. Le programme d'ordinateur exécute notamment une étape de transformation du câblage de la configuration spatiale opérationnelle à la configuration spatiale sensiblement plane. On obtient alors le second modèle numérique M2 du câblage 10 dans la configuration plane.

On reporte alors les données du second modèle numérique M2 sur la planche d'assemblage 28.

Grâce à l'invention, lorsque le câblage 10 est assemblé dans sa configuration plane sur la planche d'assemblage 28 fabriquée selon l'invention, le passage du faisceau de la configuration plane à la configuration opérationnelle aboutit, presque systématiquement à une configuration opérationnelle acceptable, puisqu'il est tenu compte lors de la modélisation du câblage des tolérances de déformation du faisceau. Ce procédé de modélisation donne ainsi une maîtrise relativement précise du passage d'une configuration à l'autre.

## Revendications

1. Procédé de modélisation d'un câblage électrique (10) pour véhicule, le câblage (10) étant destiné à être assemblé hors du véhicule dans une configuration spatiale sensiblement plane puis monté dans le véhicule dans une configuration spatiale opérationnelle obtenue par déformation de la configuration plane, le câblage (10) comprenant un faisceau (12) de conducteurs électriques et au moins un élément distinct (18) de ce faisceau, procédé du type dans lequel on modélise :
a) au moins une première partie (P1) du faisceau (12) par un objet numérique (32) d'un type défini comme étant déformable, et
b) l'élément distinct (18) du faisceau (12) par un objet numérique (36) d'un type défini comme étant indéformable,
**caractérisé en ce que** :
c) on identifie au moins une seconde partie (P2) du faisceau (12) subissant des contraintes mécaniques critiques lors du passage de la configuration plane à la configuration opérationnelle, et
d) on modélise cette seconde partie (P2) du faisceau (12) par un objet numérique du type indéformable (36), et
e) on réalise un modèle numérique (M1) du câblage (10) dans la configuration opérationnelle comprenant tous les objets numériques de type déformable (32) et indéformable (36).

2. Procédé selon la revendication 1, dans lequel on réalise un modèle numérique (M2) du câblage (10) dans la configuration plane à partir du modèle numérique (M1) du câblage (10) dans la configuration opérationnelle.

3. Procédé selon la revendication 1 ou 2, dans lequel la seconde partie (P2) du faisceau (12) est choisie parmi :
- une partie (P2A) du faisceau (12) formant une partie coudée,
- une partie du faisceau formant une partie rectiligne,
- une partie (P2B) du faisceau (12) formant une partie de raccordement de branches (14, 16) du faisceau (12).

4. Procédé selon la revendication 3, dans lequel l'objet numérique du type indéformable (36) modélisant une partie coudée (P2B) est défini par un volume indéformable (40) de forme coudée comprenant deux extrémités de liaison (40A, 40B) avec respectivement deux objets numériques de type déformable (32).

5. Procédé selon la revendication 3 ou 4, dans lequel l'objet numérique de type indéformable (36) modélisant une partie rectiligne est défini par volume indéformable (48) de forme rectiligne comprenant deux extrémités de liaison (48A, 48B) avec respectivement deux objets numériques de type déformable (32).

6. Procédé selon l'une quelconque des revendications 3 à 5, dans lequel l'objet numérique de type indéformable (36) modélisant une partie de raccordement (P2B) de N branches (14, 16) du faisceau (12) est défini par un volume indéformable (42) comprenant N branches (B1, B2, B3) munies chacune d'une extrémité de liaison (42A, 42B, 42C) avec un objet numérique de type déformable (32), la longueur de chaque branche (B1, B2, B3) du volume indéformable (42) étant proportionnelle au diamètre de la branche (14, 16) correspondante de la partie de raccordement (P2B).

7. Procédé selon l'une quelconque des revendications 1 à 6, dans lequel l'élément distinct (18) du faisceau (12) est choisi parmi :
- une goulotte (20) de guidage d'une branche (14, 16) du faisceau,
- un connecteur d'extrémité (22) d'une branche du faisceau,
- un organe de fixation (24) d'une branche du faisceau au véhicule,
- un organe de raccordement (26) d'au moins deux branches du faisceau.

8. Procédé selon l'une quelconque des revendications 1 à 7, dans lequel on réalise le modèle numérique (M1) du câblage (10) dans la configuration opérationnelle à l'aide d'un programme d'ordinateur.

9. Procédé selon la revendication 2, dans lequel on réalise le modèle numérique (M2) de câblage (10) dans la configuration plane à l'aide d'un programme d'ordinateur.

10. Procédé de fabrication d'une planche d'assemblage d'un câblage électrique pour véhicule, **caractérisé en ce que** l'on définit la planche d'assemblage (28) à partir de données du modèle numérique du câblage (10) selon la configuration plane, modélisé par le procédé selon la revendication 2.

11. Planche d'assemblage (28) d'un câblage électrique (10) pour véhicule, **caractérisé en ce qu'**elle est obtenue conformément au procédé de fabrication selon la revendication précédente.

12. Utilisation d'une planche d'assemblage (28) selon la revendication precedente dans le but de fabriquer un cablage electrique, (10) par véhicule.

## Claims

1. Method of modeling electric wiring (10) for a vehicle, the wiring (10) being for assembling away from the vehicle in a substantially plane spatial configuration, and for subsequently mounting in the vehicle in an operational spatial configuration that is obtained by deforming the plane configuration, the wiring (10) comprising a bundle (12) of electric conductors and at least one element (18) distinct from the bundle, the method being of the type in which a model is made:
a) of at least a first portion (P1) of the bundle (12) by means of a digital object (32) of a type that is defined as being deformable; and
b) of the element (18) that is distinct from the bundle (12) by means of a digital object (36) of a type that is defined as being undeformable;
the method being **characterized by** :
c) identifying at least a second portion (P2) of the bundle (12) that is subjected to critical mechanical stresses on passing from the plane configuration to the operational configuration; and
d) modeling the second portion (P2) of the bundle (12) by a digital object of the undeformable type (36); and
e) making a digital model (M1) of the wiring (10) in the operational configuration comprising all of the digital objects of the deformable type (32) and of the undeformable type (36).

2. Method according to claim 1, wherein a digital model (M2) is made of the wiring (10) in the plane configuration from the digital model (M1) of the wiring (10) in the operational configuration.

3. Method according to claim 1 or claim 2, wherein the second portion (P2) of the bundle (12) is selected from:
- a portion (P2A) of the bundle (12) that forms a bent portion;
- a portion of the bundle forming a rectilinear portion; and
- a portion (P2B) of the bundle (12) forming a coupling portion for coupling together branches (14, 16) of the bundle (12).

4. Method according to claim 3, wherein the digital object of the undeformable type (36) modeling a bent portion (P2B) is defined by an undeformable volume (40) of bent shape having two link ends (40A, 40B) for linking respectively with two digital objects (32) of deformable type.

5. Method according to claim 3 or claim 4, wherein the digital object (36) of undeformable type modeling a rectilinear portion is defined by an undeformable volume (48) of rectilinear shape having two link ends (48A, 48B) for linking respectively with two digital objects (32) of deformable type.

6. Method according to any one of claims 3 to 5, wherein the digital object of undeformable type (36) modeling a coupling portion (P2B) for coupling together N branches (14, 16) of the bundle (12) is defined by an undeformable volume (42) having N branches (B1, B2, B3), each provided with a link end (42A, 42B, 42C) for linking with a digital object (32) of deformable type, the length of each branch (B1, B2, B3) of the undeformable volume (42) being proportional to the diameter of the corresponding branch (14, 16) of the coupling portion (P2B).

7. Method according to any one of claims 1 to 6, wherein the element (18) that is distinct from the bundle (12) is selected from:
- a trough (20) for guiding a branch (14, 16) of the bundle;
- an end connector (22) for a branch of the bundle;
- a fastener member (24) for fastening a branch of the bundle to the vehicle; and
- a coupling member (26) for coupling together at least two branches of the bundle.

8. Method according to any one of claims 1 to 7, wherein the digital model (M1) of the wiring (10) is made in the operational configuration using a computer program.

9. Method according to claim 2, wherein the digital model (M2) of the wiring (10) is made in the plane configuration using a computer program.

10. Method of fabricating an assembly board for assembling electric wiring for a vehicle, the method being **characterized in that** the assembly board (28) is defined from data concerning the digital model of the wiring (10) in the plane configuration, as modeled by the method of claim 2.

11. Assembly board (28) for assembling an electric cable (10) for a vehicle, the board being **characterized in that** it is obtained by the fabrication method according to the preceding claim.

12. Use of an assembly board (28) according to the preceding claim for the purpose of fabricating electric wiring (10) for a vehicle.

## Patentansprüche

1. Verfahren zur Modellierung eines elektrischen Kabelbaums (10) für ein Fahrzeug, wobei der Kabelbaum (10) dazu bestimmt ist, außerhalb des Fahrzeugs in einer räumlichen Konfiguration, die im Wesentlichen plan ist, zusammengesetzt und dann im Fahrzeug in einer betriebsfähigen räumlichen Konfiguration, erhalten durch Verformung der planen Konfiguration, montiert zu werden, wobei der Kabelbaum (10) ein Bündel (12) elektrischer Leiter und zumindest ein von diesem Bündel separates Element (18) umfasst, wobei das Verfahren jenes Typs ist, bei dem modellhaft dargestellt wird:
a) zumindest ein erstes Teil (P1) des Bündels (12) durch ein numerisches Objekt (32) eines als verformbar definierten Typs, und
b) das vom Bündel (12) separate Element (18) durch ein numerisches Objekt (36) eines als nicht verformbar definierten Typs,
**dadurch gekennzeichnet, dass**:
c) zumindest ein zweites Teil (P2) des Bündels (12) identifiziert wird, das kritischen mechanischen Spannungen während des Übergangs von der planen Konfiguration zur betriebsfähigen Konfiguration ausgesetzt ist, und
d) dieses zweite Teil (P2) des Bündels (12) durch ein numerisches Objekt vom nicht verformbaren Typ (36) modellhaft dargestellt wird, und
e) ein numerisches Modell (M1) des Kabelbaums (10) in der betriebsfähigen Konfiguration erstellt wird, das alle numerischen Objekte verformbaren (32) und nicht verformbaren (36) Typs umfasst.

2. Verfahren nach Anspruch 1, bei dem ein numerisches Modell (M2) des Kabelbaums (10) in der planen Konfiguration ausgehend vom numerischen Modell (M1) des Kabelbaums (10) in der betriebsfähigen Konfiguration erstellt wird.

3. Verfahren nach Anspruch 1 oder 2, bei dem das zweite Teil (P2) des Bündels (12) gewählt wird unter:
einem Teil (P2A) des Bündels (12), das ein gekrümmtes Teil bildet,
einem Teil des Bündels, das ein geradliniges Teil bildet,
- einem Teil (P2B) des Bündels (12), das ein Teil zum Anschluss von Zweigen (14, 16) des Bündels (12) bildet.

4. Verfahren nach Anspruch 3, bei dem das numerische Objekt vom nicht verformbaren Typ (36), das ein gekrümmtes Teil (P2B) modellhaft darstellt, definiert ist durch ein nicht verformbares Volumen (40) mit gekrümmter Form, das zwei Enden zur Verbindung (40A, 40B) mit jeweils zwei numerischen Objekten verformbaren Typs (32) umfasst.

5. Verfahren nach Anspruch 3 oder 4, bei dem das numerische Objekt nicht verformbaren Typs (36), das ein geradliniges Teil modellhaft darstellt, definiert ist durch ein nicht verformbares Volumen (48) geradliniger Form, das zwei Enden zur Verbindung (48A, 48B) mit jeweils zwei numerischen Objekten verformbaren Typs (32) umfasst.

6. Verfahren nach einem der Ansprüche 3 bis 5, bei dem das numerische Objekt nicht verformbaren Typs (36), das ein Teil zum Anschluss (P2B) von N Zweigen (14, 16) des Bündels (12) modellhaft darstellt, definiert ist durch ein nicht verformbares Volumen (42), das N Zweige (B1, B2, B3) umfasst, die jeweils mit einem Ende zur Verbindung (42A, 42B, 42C) mit einem numerischen Objekt verformbaren Typs (32) ausgestattet sind, wobei die Länge jedes Zweigs (B1, B2, B3) des nicht verformbaren Volumens (42) proportional ist zum Durchmesser des entsprechenden Zweigs (14, 16) des Anschlussteils (P2B).

7. Verfahren nach einem der Ansprüche 1 bis 6, bei dem das vom Bündel (12) separate Element (18) gewählt wird unter:
einem Kanal (20) zur Führung eines Zweigs (14, 16) des Bündels,
einem Endverbinder (22) eines Zweigs des Bündels,
eines Elements zur Befestigung (24) eines Zweigs des Bündels am Fahrzeug,
einem Element zum Anschluss (26) von zumindest zwei Zweigen des Bündels.

8. Verfahren nach einem der Ansprüche 1 bis 7, bei dem das numerische Model (M1) des Kabelbaums (10) in der betriebsfähigen Konfiguration mit Hilfe eines Rechnerprogramms erstellt wird.

9. Verfahren nach Anspruch 2, bei dem das numerische Modell (M2) des Kabelbaums (10) in der planen Konfiguration mit Hilfe eines Rechnerprogramms erstellt wird.

10. Verfahren zur Herstellung eines Montagebretts eines elektrischen Kabelbaums für ein Fahrzeug, **dadurch gekennzeichnet, dass** das Montagebrett (28) ausgehend von Daten des numerischen Modells des Kabelbaums (10) gemäß der planen Konfiguration festgelegt wird, das durch das Verfahren nach Anspruch 2 modelliert wird.

11. Montagebrett (28) eines elektrischen Kabelbaums (10) für ein Fahrzeug, **dadurch gekennzeichnet, dass** es gemäß dem Herstellungsverfahren nach dem vorstehenden Anspruch erhalten wird.

12. Verwendung eines Montagebretts (28) nach dem vorstehenden Anspruch mit dem Ziel, einen elektrischen Kabelbaum (10) für ein Fahrzeug herzustellen.
